# FASCICULE DE BREVET EUROPEEN

(11) **EP 2 235 893 B1**
(45) Date de publication et mention de la délivrance du brevet: **10.08.2016**
(21) Numéro de dépôt: 08865827.3
(22) Date de dépôt: 02.12.2008
(51) Int. Cl.: H04L 12/70

(54) **TECHNIQUE POUR PROTÉGER UN CHEMIN À COMMUTATION D'ÉTIQUETTES MULTIPOINT À MULTIPOINT EN MODE CONNECTÉ LORS D'UNE PANNE AFFECTANT UN NOEUD DONNÉ DU CHEMIN**
VERFAHREN ZUM SCHUTZ EINER MEHRPUNKT-ZU-MEHRPUNKT-TAG-SCHALTSTRECKE IM VERBUNDENEN MODUS NACH EINEM DEFEKT MIT AUSWIRKUNG AUF EINEN KNOTEN DER STRECKE
TECHNIQUE FOR PROTECTING A MULTIPOINT-TO-MULTIPOINT TAG SWITCHING PATH IN CONNECTED MODE UPON A FAILURE AFFECTING A GIVEN NODE OF THE PATH

(30) Priorité: 03.12.2007 FR 0759527
(43) Date de publication de la demande: 06.10.2010
(73) Titulaire: Orange, 75015 Paris (FR)
(72) Inventeur: CHAITOU, Mohamad, F-75018 Paris (FR); LE ROUX, Jean-Louis, F-22300 Lannion (FR)
(86) Numéro de dépôt international: PCT/FR2008/052184
(87) Numéro de publication internationale: WO 2009/080930

(56) Documents cités:
- LE ROUX (ED) FRANCE TELECOM R AGGARWAL JUNIPER NETWORKS J P VASSEUR CISCO SYSTEMS J L ET AL: "P2MP MPLS-TE Fast Reroute with P2MP Bypass Tunnels; draft-ietf-mpls-p2mp-te-bypass-01.txt" IETF STANDARD-WORKING-DRAFT, INTERNET ENGINEERING TASK FORCE, IETF, CH, vol. mpls, no. 1, 1 juillet 2007 (2007-07-01), XP015051471 ISSN: 0000-0004
- MINEI (EDITOR) K KOMPELLA JUNIPER NETWORKS I WIJNANDS (EDITOR) B THOMAS CISCO SYSTEMS I ET AL: "Label Distribution Protocol Extensions for Point-to-Multipoint and Multipoint-to-Multipoint Label Switched Paths; draft-ietf-mpls-ldp-p2mp-03.txt" IETF STANDARD-WORKING-DRAFT, INTERNET ENGINEERING TASK FORCE, IETF, CH, vol. mpls, no. 3, 9 juillet 2007 (2007-07-09), XP015051466 ISSN: 0000-0004

## Description

L'invention concerne une technique pour protéger un chemin à commutation d'étiquettes multipoint à multipoint en mode connecté lors d'une panne affectant un lien ou un noeud donné du chemin dans un réseau de communication par commutation d'étiquettes et pour acheminer des paquets lors de la panne.

Un réseau de communication par commutation d'étiquettes multi-protocole ou réseau IP/MPLS, pour "Multi-Protocol Label Switching" est constitué d'un ensemble de routeurs, dont certains sont des routeurs de coeur, c'est-à-dire des routeurs dédiés à l'acheminement des paquets, et d'autres des routeurs d'accès, c'est-à-dire des routeurs assurant l'interconnexion entre le réseau de communication IP et le réseau MPLS. L'ensemble des routeurs d'accès du réseau sont raccordés entre eux par des tunnels MPLS. Ils permettent d'établir une connectivité de bout en bout entre deux équipements terminaux qui leur sont raccordés. Il existe deux modes pour l'établissement de tunnels MPLS, un premier mode dit, mode non connecté reposant sur le protocole LDP, et un deuxième mode, dit mode connecté, reposant sur le protocole RSVP-TE, pour "Resource ReserVation Protocol-Traffic Engineering", tel que spécifié dans le document RFC 3209 par l'IETF, pour "Internet Engineering Task Force". Ce deuxième mode est encore appelé mode MPLS-TE et permet de mettre en oeuvre des fonctions d'ingénierie de trafic avancées comme l'optimisation fine de la bande passante, le contrôle d'admission, et le re-routage rapide en cas de panne. Lors de l'établissement d'un tunnel de type MPLS-TE, les ressources, telles que la bande passante, sont explicitement réservées sur l'ensemble des liens empruntés dans le réseau sous-jacent. Le mécanisme MPLS-TE (MPLS Traffic Engineering) permet l'établissement de chemins à commutation d'étiquettes ou LSP pour «Label Switched Path» MPLS, routés de façon explicite en fonction de contraintes de trafic et des ressources disponibles dans le réseau. Ces LSP MPLS sont appelés TE-LSP ou encore «tunnels MPLS-TE». Le mécanisme MPLS-TE est utilisé pour le transport d'applications à fortes contraintes de bande passante, de qualité de service et de disponibilité, telles que des applications de voix, de vidéo, ou de télévision. Dans ce deuxième mode d'établissement de tunnels MPLS, ceux-ci sont établis de façon automatique par le protocole de signalisation RSVP-TE. Ces tunnels MPLS-TE peuvent être assimilés à des connexions. Le mécanisme MPLS-TE permet ainsi d'obtenir un mode connecté dans les réseaux de type IP, permettant d'optimiser l'utilisation des ressources et de maximiser la charge de trafic pouvant circuler sur le réseau tout en préservant la qualité de service. Ainsi, un réseau de communication MPLS, supportant le protocole RSVP-TE, est un réseau de transport de paquets en mode connecté. Le protocole RSVP-TE, dans son extension définie dans le document RFC 4875, permet en outre d'établir des tunnels MPLS-TE point-à-multipoint, appelé P2MP, entre un routeur source, encore appelé routeur "racine", et une pluralité de routeurs de destination, encore appelés routeurs d'extrémité, pour le transport de trafic entre le routeur racine et la pluralité de routeurs d'extrémité.

On assiste à l'émergence d'applications dites multipoint-à-multipoint, ou MP2MP, pour lesquels les routeurs d'extrémité sont à la fois émetteurs et récepteurs. Certaines de ces applications ont de fortes contraintes de bande passante, de qualité de service et de disponibilité, comme par exemple des applications de type visioconférence multipoint. Les inventeurs de la présente demande de brevet ont donc constaté qu'il serait utile de concevoir un chemin à commutation d'étiquettes avec réservation de ressources multipoint à multipoint, noté MP2MP et appelé également par la suite multipoint à multipoint en mode connecté. Dans un tel chemin, un noeud est susceptible de communiquer avec n'importe lequel des autres noeuds du chemin. Les ressources nécessaires à une telle communication sont réservées lors de l'établissement du chemin. Sur chacun des liens ou branches nécessaires à l'établissement du chemin, des connexions bidirectionnelles avec réservation de ressources sont établies.

Par convention, on appelle noeud en amont un premier noeud demandant un établissement d'une connexion bidirectionnelle à un deuxième noeud. De façon symétrique, le deuxième noeud est en aval du premier noeud. Une branche par l'intermédiaire de laquelle la demande d'établissement a été reçue au deuxième noeud est une branche amont. Une branche par l'intermédiaire de laquelle la demande d'établissement a été envoyée par le deuxième noeud est une branche aval.

Dans un tel chemin, un paquet reçu sur une branche amont par un noeud est rediffusé sur l'ensemble des branches aval issues de ce noeud, le cas échéant. Un paquet reçu sur une branche aval est rediffusé sur la branche amont et, le cas échéant, sur l'ensemble des branches aval issues de ce noeud à l'exclusion de celle sur laquelle le paquet a été reçu.

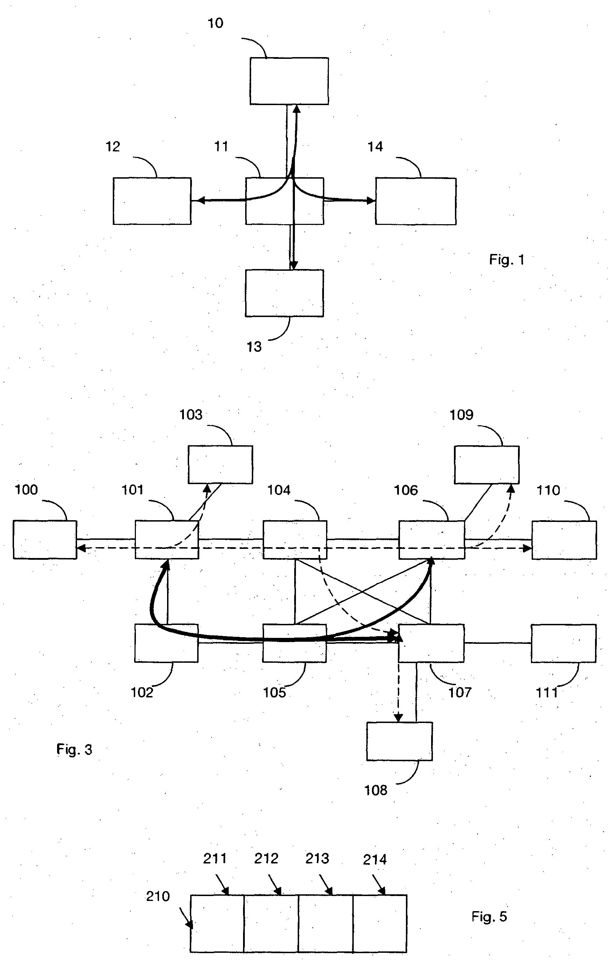

Il est nécessaire de protéger ce chemin notamment en cas de panne de l'un des noeuds du chemin. Par exemple, sur la figure 1, on a représenté une partie d'un chemin comprenant cinq noeuds 10-14. Le noeud 10 est le noeud racine de ce chemin; le noeud 10 est le noeud amont du noeud 11 et les noeuds 12-14 sont les noeuds aval du noeud 11. Supposons que le noeud à protéger est le noeud 11. Afin que les différents noeuds puissent communiquer entre eux lors de la panne affectant un lien reliant le noeud 11 ou le noeud 11, il est nécessaire d'établir douze chemins à commutation d'étiquettes TE-LSP P2P unidirectionnels, c'est-à-dire les chemins suivants : 10-12, 10-13, 10-14, 12-13, 12-14 et 13-14 et réciproquement. Par exemple, en ce qui concerne le noeud 12, il faut qu'il ait connaissance de l'appartenance des noeuds 13 et 14 au chemin multipoint à multipoint et de leurs capacités respectives afin de pouvoir établir les chemins de secours 12-13 et 12-14 vers ces deux noeuds. Dans ce cas, il est alors nécessaire de transmettre ces informations lors de l'établissement du chemin multipoint à multipoint primaire en mode connecté, dans la demande d'établissement de connexion bidirectionnelle. Ceci implique une modification importante dans la structure de ce message. De plus, les paquets transmis sur ces différents TE-LSP P2P vont se trouver dupliqués, étant donné qu'il n'y a pas de coordination lors de l'établissement de ces différents TE-LSP P2P. Un paquet émis par le noeud 12 au noeud 14 par l'intermédiaire du TE-LSP 12-14 et au noeud 13 par l'intermédiaire du TE-LSP 12-13 va être diffusé deux fois sur un lien dans le réseau sous-jacent si ce lien est emprunté par les deux TE-LSP. De plus, il est nécessaire d'établir une pluralité de TE-LSP P2P, ce qui implique une consommation de ressources dans le plan de commande importante aussi bien de ressources CPU que de mémoire au niveau des noeuds du réseau. Une telle protection n'est donc pas envisageable pour des réseaux de grande taille.

Dans une deuxième option, où on souhaite établir une protection à l'aide de TE-LSP P2MP, il est alors nécessaire, toujours dans l'exemple de la figure 1, d'établir quatre TE-LSP P2MP : (10; 12-13-14), (12; 10-13-14), (13; 10, 12, 14) et (14; 10, 12, 13). Cette deuxième option résout le problème de duplication de trafic mais présente en partie les inconvénients indiqués ci-dessus dans le cas d'une protection par TE-LSP P2P, notamment les extensions protocolaires nécessaires et la consommation de ressources dans le plan de commande au niveau des noeuds. Par exemple, le document D1 "draft-ietf-mpls-p2mp-te-bypass-01" propose une telle protection par un chemin point à multipoints P2MP-TE, mais présente les inconvénients cités ci-dessus lorsqu'il est appliqué à un contexte multipoint à multipoint.

Il existe donc un besoin d'une technique plus efficace permettant de protéger un chemin à commutation d'étiquettes multipoint à multipoint avec réservation de ressources établi dans un réseau de communication à commutation d'étiquettes lors d'une panne affectant l'un des noeuds d'acheminement ou un lien traversé par le chemin. L'invention répond à ce besoin en proposant un procédé d'initiation amont d'une protection d'un chemin à commutation d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, ledit réseau comprenant des noeuds d'acheminement organisés suivant le chemin primaire, le chemin primaire étant adapté pour faire communiquer entre eux une pluralité de noeuds d'extrémité et comprenant des branches reliant les noeuds d'acheminement deux à deux à partir d'un noeud racine jusqu'aux noeuds d'extrémité, le noeud racine ayant la liste des noeuds d'extrémités et les routes explicites sur lesquelles lesdites branches s'appuient, un premier noeud envoyant une demande d'ouverture de connexion bi-directionnelle à un deuxième noeud est appelé noeud amont, ledit deuxième noeud étant appelé noeud aval, un message de demande d'ouverture de connexion bi-directionnelle comprenant la liste des routes explicites du chemin à commutation d'étiquettes à destination des différents noeuds d'extrémité, un noeud ayant demandé l'ouverture avec le noeud donné d'une connexion bi-directionnelle étant appelé noeud protecteur en amont du noeud donné, un noeud auquel le noeud donné a demandé l'ouverture d'une connexion bi-directionnelle étant appelé noeud protecteur en aval du noeud donné, le chemin de secours ayant été initialement établi entre un noeud protecteur en amont du noeud donné et des noeuds protecteurs en aval du noeud donné, le noeud protecteur en amont du noeud donné ayant demandé l'ouverture d'une connexion bi-directionnelle avec les noeuds protecteurs en aval du noeud donné, ledit noeud protecteur amont jouant le rôle de noeud racine dans l'établissement de ce chemin de secours,
ledit procédé comprenant les étapes suivantes mises en oeuvre par le noeud protecteur en amont du noeud donné, le chemin de secours étant adapté pour faire communiquer entre eux un ensemble de noeuds protecteurs constitué du noeud en amont et des noeuds en aval du noeud donné :
- une étape d'affectation d'une étiquette de secours à associer par les noeuds protecteurs de l'ensemble aux paquets destinés à être acheminés par une des branches du chemin primaire reliant le noeud donné à un des noeuds protecteurs de l'ensemble et acheminés par le chemin de secours lors de la panne ;
- une étape d'envoi d'une demande de protection à chacun des noeuds protecteurs en aval du noeud donné, ladite demande de protection indiquant le chemin primaire, le chemin de secours et l'étiquette de secours affectée,
ladite étape d'envoi étant réitérée pour l'ensemble des noeuds protecteurs en aval du noeud donné,

On se place ici dans le cas d'un établissement d'une protection pour un noeud donné, appelé par la suite noeud à protéger. Ce noeud est entouré, dans le chemin à commutation d'étiquettes primaire multipoint à multipoint, d'un ensemble de noeuds protecteurs constitué d'un noeud protecteur situé en amont et de noeuds protecteurs situés en aval. Le noeud protecteur en amont initie la protection du chemin primaire afin d'acheminer les paquets en cas de panne du noeud à protéger, par un chemin de secours multipoint à multipoint avec réservation de ressources établi entre les différents noeuds de l'ensemble des noeuds protecteurs. Il affecte une étiquette, dite de secours, à associer aux paquets lors de la panne. Lors de la panne, les paquets, acheminés en l'absence de panne par l'intermédiaire d'une des branches du chemin primaire issues du noeud à protéger, sont encapsulés dans le chemin de secours, l'étiquette de secours leur étant associée. On a alors deux niveaux d'étiquettes : une première correspond à l'acheminement sur le chemin de secours, la deuxième étant l'étiquette de secours. Le chemin de secours étant bidirectionnel, cette étiquette de secours est utilisée dans les deux sens de communication, aussi bien pour émettre des paquets étiquetés que pour traiter des paquets étiquetés reçus sur le chemin de secours. Ainsi, un noeud protecteur, qu'il s'agisse du noeud protecteur en amont que des noeuds protecteurs en aval, recevant par l'intermédiaire du chemin de secours un paquet auquel l'étiquette de secours est associée peut en déduire quel est le chemin primaire utilisé en l'absence de panne. La même étiquette étant affectée par le noeud protecteur en amont et utilisée par l'ensemble des noeuds protecteurs, y compris le noeud protecteur en amont, il n'y a pas de duplication de paquets dans le chemin de secours et donc dans le réseau. Les ressources du réseau sont par ailleurs économisées par rapport aux solutions de l'art antérieur nécessitant une protection par plusieurs tunnels, un seul tunnel multipoint à multipoint de secours étant établi.

De plus, la protection obtenue lors d'une panne est compatible avec les exigences de qualité de service requises pour des applications à fortes contraintes de bande passante, de qualité de service et de disponibilité avec un temps d'interruption inférieur à cinquante millisecondes.

Dans un premier mode de réalisation, dit mode implicite, l'étiquette à associer à un paquet acheminé sur le chemin de secours est, en complément de l'étiquette liée à l'acheminement sur le chemin de secours, l'étiquette de secours. Dans ce premier mode, l'information relative au chemin de secours sur lequel un paquet est arrivé permet d'identifier le noeud protecteur en amont et de lire dans la table de commutation d'étiquettes contextuelle associée. Ce mode implicite implique qu'un seul noeud protecteur du chemin de secours MP2MP alloue des étiquettes de secours sur ce chemin de secours.

Le procédé d'initiation d'une protection amont comprend en outre une étape de configuration d'une table de commutation d'étiquettes contextuelle destinée à être utilisée lors de la panne, ladite table associant à l'étiquette de secours, pour chaque branche du chemin primaire issue du noeud protecteur, en dehors de la branche affectée par la panne, une sortie vers le chemin primaire.

Une table de commutation d'étiquettes contextuelle destinée à être utilisée lors de la panne, cette table associant à l'étiquette de secours, pour chaque branche du chemin primaire issue du noeud protecteur, en dehors de la branche affectée par la panne, une sortie vers le chemin primaire, est créée ou modifiée en fonction des informations reçues dans la demande de protection. Cette table est associée à un identifiant du noeud protecteur en amont.

Dans un mode de réalisation, la demande de protection comprend en outre un identifiant du noeud protecteur en amont à associer en tant qu'étiquette auxdits paquets en complément de l'étiquette de secours

Dans ce deuxième mode de réalisation, dit mode explicite, l'identifiant du noeud protecteur en amont permet d'utiliser celui-ci en tant qu'étiquette de contexte.

L'invention concerne également un procédé d'initiation d'une protection d'un chemin à commutation d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, ledit réseau comprenant des noeuds d'acheminement organisés suivant le chemin primaire, le chemin primaire étant adapté pour faire communiquer entre eux une pluralité de noeuds d'extrémité et comprenant des branches reliant les noeuds d'acheminement deux à deux à partir d'un noeud racine jusqu'aux noeuds d'extrémité, le noeud racine ayant la liste des noeuds d'extrémités et les routes explicites sur lesquelles lesdites branches s'appuient, un premier noeud envoyant une demande d'ouverture de connexion bi-directionnelle à un deuxième noeud est appelé noeud amont, ledit deuxième noeud étant appelé noeud aval, un message de demande d'ouverture de connexion bi-directionnelle comprenant la liste des routes explicites du chemin à commutation d'étiquettes à destination des différents noeuds d'extrémité, un noeud ayant demandé l'ouverture avec le noeud donné d'une connexion bi-directionnelle étant appelé noeud protecteur en amont du noeud donné, un noeud auquel le noeud donné a demandé l'ouverture d'une connexion bi-directionnelle étant appelé noeud protecteur en aval du noeud donné, le chemin de secours ayant été initialement établi entre un noeud protecteur en amont du noeud donné et des noeuds protecteurs en aval du noeud donné, le noeud protecteur en amont du noeud donné ayant demandé l'ouverture d'une connexion bi-directionnelle avec les noeuds protecteurs en aval du noeud donné, ledit noeud protecteur amont jouant le rôle de noeud racine dans l'établissement de ce chemin de secours, ledit procédé comprenant les étapes suivantes mises en oeuvre par un noeud protecteur en aval du noeud donné, le chemin de secours étant adapté pour faire communiquer entre eux un ensemble de noeuds protecteurs constitué du noeud en amont et des noeuds en aval du noeud donné :
- une étape de réception d'une demande de protection, ladite demande de protection indiquant le chemin primaire, le chemin de secours et une étiquette de secours à associer aux paquets destinés à être acheminés par une des branches du chemin primaire reliant le noeud donné à un des noeuds protecteurs et acheminés par le chemin de secours lors de la panne.

Le procédé de protection aval comprend en outre une étape de configuration d'une table de commutation d'étiquettes contextuelle destinée à être utilisée lors de la panne, ladite table associant à l'étiquette de secours, pour chaque branche du chemin primaire issue du noeud protecteur, en dehors de la branche affectée par la panne, une sortie vers le chemin primaire.

L'invention concerne également un procédé d'acheminement de paquets lors d'une panne affectant un noeud donné d'un chemin à commutation d'étiquettes primaire multipoint à multipoint en mode connecté dans un réseau de communication par commutation d'étiquettes, dans lequel ledit chemin primaire est protégé par un chemin à commutation d'étiquettes de secours multipoint à multipoint en mode connecté, ladite protection ayant été initiée selon les procédés d'initiation d'une protection décrits ci-dessus, dans lequel, les noeuds protecteurs acheminent des paquets reçus de la façon suivante :
- des paquets reçus par l'intermédiaire d'une branche du chemin de secours et auxquels l'étiquette de secours est associée, sont acheminés, le cas échéant, vers d'autres branches du chemin de secours et vers des branches du chemin primaire issues dudit noeud, à l'exception de la branche reliant le noeud protecteur au noeud donné ;
- des paquets reçus par l'intermédiaire d'une branche du chemin primaire sont acheminés par le chemin de secours après association de l'étiquette de secours et le cas échéant, vers d'autres branches du chemin primaire issues du noeud, à l'exception de la branche reliant le noeud protecteur au noeud donné.

Dans le plan de transfert, l'étiquette à associer à un paquet acheminé sur le chemin de secours est, en complément de l'étiquette liée à l'acheminement sur le chemin de secours, l'étiquette de secours.

L'invention concerne en outre un noeud protecteur amont pour protéger un chemin à commutations d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, comprenant des moyens agencés pour mettre en oeuvre les étapes selon le procédé d'initiation amont décrit ci-dessus.

L'invention concerne également un noeud protecteur aval pour protéger un chemin à commutations d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, comprenant des moyens agencés pour mettre en oeuvre les étapes selon le procédé d'initiation aval décrit ci-dessus.

L'invention concerne également un système de communication agencé pour protéger un chemin à commutations d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, adapté pour faire communiquer entre eux un ensemble de noeuds protecteurs constitué du noeud en amont et des noeuds en aval du noeud donné, ledit système comprenant ;
- un noeud protecteur amont tel que décrit précédemment ;
- au moins un noeud protecteur aval tel que décrit précédemment.

De plus, l'invention concerne :
- un programme pour noeud amont d'un réseau de communication à commutation d'étiquettes, pour protéger un chemin à commutation d'étiquettes multipoint à multipoint en mode connecté par un chemin à commutation d'étiquettes de secours multipoint à multipoint en mode connecté lors d'une panne affectant un noeud donné du chemin primaire, comprenant des instructions de programme destinées à commander l'exécution des étapes du procédé d'initiation d'une protection précédemment décrit qui sont exécutées par le noeud, lorsque le programme est exécuté par célui-ci ;
- un support d'enregistrement lisible par un noeud d'un réseau de communication à commutation d'étiquettes sur lequel est enregistré le programme pour noeud amont d'un réseau de communication à commutation d'étiquettes.

L'invention concerne également:
- un programme pour noeud aval d'un réseau de communication à commutation d'étiquettes, pour protéger un chemin à commutation d'étiquettes multipoint à multipoint en mode connecté par un chemin à commutation d'étiquettes de secours multipoint à multipoint en mode connecté lors d'une panne affectant un noeud donné du chemin primaire, comprenant des instructions de programme destinées à commander l'exécution des étapes du procédé de protection précédemment décrit qui sont exécutées par le noeud, lorsque le programme est exécuté par celui-ci ;
- un support d'enregistrement lisible par un noeud d'un réseau de communication à commutation d'étiquettes sur lequel est enregistré le programme pour noeud aval d'un réseau de communication à commutation d'étiquettes.

L'invention concerne un signal émis par un noeud d'un réseau de communication à commutation d'étiquettes à destination d'un autre noeud du réseau et véhiculant une demande de protection d'un chemin à commutation d'étiquettes multipoint à multipoint primaire en mode connecté par un chemin à commutation d'étiquettes de secours multipoint à multipoint en mode connecté lors d'une panne affectant un noeud donné, comprenant une étiquette de secours à associer en tant qu'étiquette aux paquets destinés à être acheminés par une des branches du chemin primaire reliant le noeud donné à l'autre noeud et acheminés par le chemin de secours lors de la panne, l'étiquette étant associée par le noeud aux paquets destinés à être acheminés par une branche du chemin primaire reliant ledit noeud et le noeud donné et acheminés par le chemin de secours lors de la panne.

L'invention sera mieux comprise à l'aide de la description suivante d'un mode de réalisation particulier des procédés de l'invention, en référence aux dessins annexés sur lesquels :
- la figure 1 représente une partie d'un arbre TE-LSP MP2MP ;
- la figure 2a représente les étapes du procédé d'initiation d'une protection tel qu'il est mis en oeuvre par un noeud protecteur en amont selon un mode particulier de réalisation de l'invention ;
- la figure 2b représente les étapes du procédé de protection tel qu'il est mis en oeuvre par un noeud protecteur en aval selon un mode particulier de réalisation de l'invention ;
- la figure 3 représente une partie d'un réseau de communication ;
- la figure 4 représente un dispositif selon un mode particulier de réalisation de l'invention ;
- la figure 5 représente un message de demande de protection selon un mode particulier de réalisation de l'invention.

La figure 1 a été commentée lors de la présentation de l'état de la technique.

Sur la figure 3, on a représenté une partie d'un réseau de communication sous-jacent sur lequel s'appuie un réseau de communication par commutation d'étiquettes. Une pluralité de noeuds 100 à 111 est représentée. Un chemin à commutation d'étiquettes multipoint à multipoint en mode connecté, appelé par la suite chemin primaire et noté LSP1, est représenté en pointillés. Il permet aux noeuds 100, 103, 109, 110, 107 et 108 de communiquer entre eux. Par exemple, le noeud 100 initie l'établissement du chemin multipoint à multipoint avec réservation de ressources. Il est le noeud racine du chemin primaire. Le chemin primaire peut être établi, par exemple, à l'aide d'un procédé pour faire communiquer entre eux une pluralité de noeuds d'extrémité à travers un réseau de communication à l'aide d'un chemin à commutation d'étiquettes avec réservation de ressources multipoint à multipoint, noté MP2MP, tel que décrit ci-après. Afin d'établir un tel chemin multipoint à multipoint en mode connecté, on organise des noeuds d'acheminement suivant un arbre comprenant un noeud racine et des branches reliant les noeuds deux à deux, à partir du noeud racine jusqu'aux noeuds d'extrémité.

Un message de demande d'ouverture de connexion bidirectionnelle utilisé pour l'établissement d'un chemin à commutation d'étiquettes multipoint à multipoint en mode connecté comprend :
- un identifiant du tunnel ;
- un identifiant du chemin à commutation d'étiquettes ;
- l'adresse du noeud racine dans le réseau de communication ;
- une liste d'adresses de noeuds comprenant les adresses respectives d'un ou de plusieurs noeuds d'extrémité ;
- une étiquette allouée localement par le noeud émetteur du message pour le chemin à commutation d'étiquettes dans le sens montant ;
- des bandes passantes requises respectives du ou des noeuds de la liste de noeuds ;
- une liste de routes explicites du chemin à commutation d'étiquettes à destination des différents noeuds d'extrémité ;
- une bande passante requise pour le sens descendant, c'est-à-dire du noeud racine vers les noeuds d'extrémité ;
- une bande passante requise pour le sens montant, c'est-à-dire des noeuds d'extrémité vers le noeud racine,
- un champ indiquant simultané ou alternatif.

Par exemple, dans le protocole RSVP-TE, il s'agit d'un message "Path".

Par convention, on appelle noeud en amont un premier noeud envoyant une demande d'ouverture de connexion bidirectionnelle à un deuxième noeud. De façon symétrique, le deuxième noeud est en aval du premier noeud. Une branche par l'intermédiaire de laquelle la demande a été reçue au deuxième noeud est une branche amont. Une branche par l'intermédiaire de laquelle la demande a été envoyée par le deuxième noeud est une branche aval.

Le noeud racine reçoit l'ensemble des informations nécessaires à l'établissement de l'arbre, notamment la liste des noeuds d'extrémité, leurs bandes passantes requises respectives, les routes explicites sur lesquelles les branches de l'arbre s'appuient.

A partir des routes explicites, le noeud racine détermine les branches sur lesquelles une réservation de ressources doit être effectuée.

Pour chaque branche aval ainsi déterminée, le noeud racine transmet une demande d'ouverture de connexion bidirectionnelle avec réservation de ressources. Pour une branche donnée, cette demande comprend notamment une bande passante requise pour le sens descendant ainsi qu'une bande passante requise pour le sens montant. Ces valeurs peuvent être déterminées par le noeud racine de façon analogue au traitement qui va être décrit ensuite pour un noeud recevant une demande d'ouverture de connexion bidirectionnelle avec réservation de ressources. Cette demande d'ouverture de connexion bidirectionnelle avec réservation de ressources comprend également une liste d'adresses de noeuds comprenant les adresses respectives d'un ou de plusieurs noeuds d'extrémité à connecter à travers une branche aval issue du noeud racine et une liste de bandes passantes comprenant les bandes passantes requises respectives du ou des noeuds de la liste de noeuds ainsi qu'une liste de routes explicites du chemin à commutation d'étiquettes à destination des différents noeuds d'extrémité.

Un noeud, recevant une demande d'ouverture de connexion bidirectionnelle avec réservation de ressources à travers une branche amont, vérifie s'il est noeud d'acheminement ou noeud d'extrémité.

Si le noeud ayant reçu le message est un noeud d'extrémité, il réserve les ressources pour le sens montant en fonction de la valeur reçue dans le champ relatif à la bande passante requise pour le sens montant et transmet un message de confirmation de connexion, comprenant une bande passante requise pour le flot descendant, égale à celle reçue dans le message de demande d'ouverture de connexion bidirectionnelle.

Si le noeud ayant reçu le message est un noeud d'acheminement, il détermine à partir de la liste de routes explicites du chemin à commutation d'étiquettes à destination des différents noeuds d'extrémité l'ensemble des branches aval à traiter. Dans le cas particulier où le noeud d'acheminement est également un noeud d'extrémité, on considère qu'il s'agit d'une branche aval particulière, qui fait l'objet des étapes décrites ci-après au même titre que les autres branches aval.

Pour une branche aval donnée, il détermine alors une bande passante requise pour le flot montant en fonction de la bande passante requise à travers cette branche aval pour un flot montant provenant d'au moins un noeud d'extrémité. Puis, pour cette même branche aval donnée, il détermine une bande passante requise pour le flot descendant, en fonction de la valeur de la bande passante requise pour le flot descendant à travers la branche amont, reçue dans le message de demande d'ouverture de connexion et de celle requise à travers au moins une autre branche aval issue du noeud d'acheminement pour un flot montant provenant d'au moins un noeud d'extrémité. Une fois, ces deux bandes passantes déterminées, il envoie une nouvelle demande d'ouverture de connexion bidirectionnelle avec réservation de ressources, comprenant la bande passante requise pour le flot descendant déterminée, la bande passante requise pour le flot montant déterminée ainsi qu'une liste d'adresses de noeuds comprenant les adresses respectives du ou des noeuds d'extrémité à connecter à travers la branche aval et une liste de bandes passantes comprenant les bandes passantes requises respectives du ou des noeuds de la liste de noeuds, au noeud de la branche aval donnée, voisin du noeud d'acheminement. Il s'agit du noeud d'acheminement situé à l'autre extrémité de la branche aval donnée.

Il effectue ces traitements, le cas échéant, pour l'ensemble des branches aval issues du noeud d'acheminement.

Le message de demande d'ouverture de connexion bidirectionnelle avec réservation de ressources peut comprendre un champ indiquant "simultané" ou "alternatif'.

Si le champ indique "simultané", c'est-à-dire si les noeuds d'extrémité sont susceptibles de communiquer simultanément, une bande passante requise, pour une branche aval issue du noeud d'acheminement, est déterminée en fonction de la somme des bandes passantes requises respectives pour des flots susceptibles d'être acheminés à travers cette branche. On prévoit ainsi la réservation de bande passante pour l'ensemble des flots susceptibles d'être acheminés à travers cette branche.

Si le champ indique "alternatif", c'est-à-dire si les noeuds sont susceptibles de communiquer alternativement, une bande passante requise, pour une branche aval issue du noeud d'acheminement, est déterminée en fonction du maximum parmi les bandes passantes requises respectives pour des flots susceptibles d'être acheminés à travers cette branche.

Lorsque le noeud a reçu un ou des message(s) de confirmation de connexion en provenance du ou des noeud(s) situé(s) à l'autre extrémité de la branche, un message de confirmation de connexion comprenant une bande passante réservée pour le sens montant et une bande passante requise pour le sens descendant, il réserve la bande passante requise sur le sens montant de la branche amont puis il transmet au noeud d'acheminement qui lui avait transmis la demande d'ouverture de connexion bidirectionnelle avec réservation de ressources un message de confirmation de connexion, comprenant la valeur de la bande passante réservée pour le sens montant et la valeur de la bande passante requise pour le sens descendant. Il réserve également effectivement la bande passante requise pour le sens descendant pour la branche aval.

On peut établir ainsi un chemin multipoint à multi point en mode connecté.

On se place par la suite dans le cas où on cherche à protéger le chemin primaire lors d'une panne affectant le noeud 104 ou une des branches permettant de communiquer avec lui dans le chemin primaire.

Le noeud 104 a uniquement une fonction d'acheminement des données dans l'arborescence définie pour le chemin primaire. Trois branches du chemin primaire sont issues du noeud 104 le reliant aux noeuds 101, 106 et 107. Le noeud 104, lorsqu'il reçoit un paquet sur une des branches du chemin primaire, le retransmet sur les autres branches du chemin primaire.

Un deuxième chemin à commutation d'étiquettes multipoint à multipoint en mode connecté est représenté en gras sur la figure 3. Il est établi afin de permettre à l'ensemble des noeuds protecteurs constitué du noeud en amont du noeud 104, c'est-à-dire le noeud 101, et des noeuds en aval du noeud 104, c'est-à-dire les noeuds 106 et 107 de communiquer entre eux par exemple à l'aide du procédé décrit précédemment. Les différents noeuds protecteurs du noeud 104, c'est-à-dire les noeuds 101, 106, 107 sont des noeuds d'extrémité de ce deuxième chemin, appelé par la suite chemin de secours.

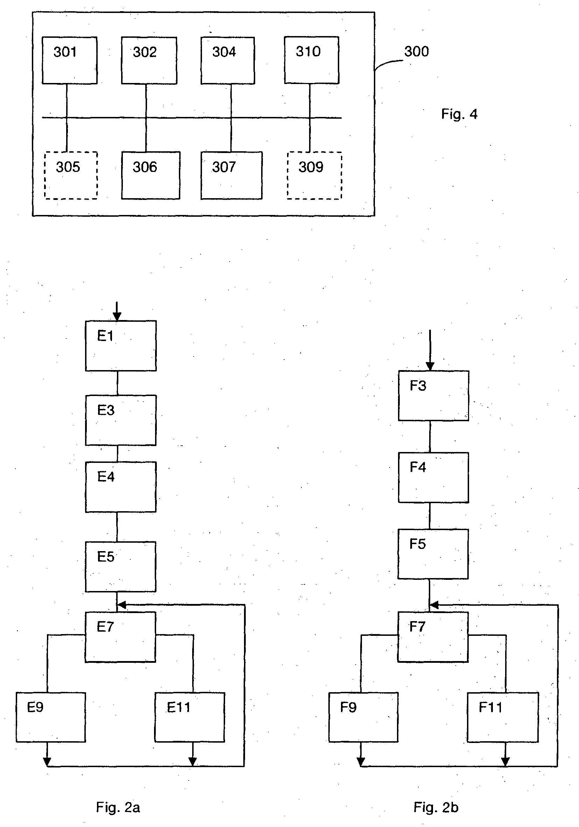

Le procédé d'initiation d'une protection selon un premier mode particulier de l'invention, dit mode explicite, tel qu'il est mis en oeuvre par un noeud protecteur en amont va maintenant être décrit en relation avec la figure 2a.

Dans une étape initiale du procédé d'initiation d'une protection, non représentée sur la figure 2a, le noeud protecteur en amont du noeud à protéger 104 initie un établissement du deuxième chemin représenté sur la figure 3, en tant que chemin de secours, par exemple selon le procédé décrit précédemment. Il joue le rôle du noeud racine dans l'établissement de ce chemin de secours et transmet une demande d'ouverture de connexion bidirectionnelle à destination des autres noeuds protecteurs.

On se place ici dans le cas particulier où le noeud protecteur en amont 101 initie une protection du chemin primaire LSP1 pour protéger contre une panne du noeud 104, appelé noeud à protéger. Les noeuds protecteurs sont identifiés de façon unique par un identifiant, noté Id(noeud).

Dans une étape E1 d'affectation d'une étiquette de secours, le noeud protecteur en amont 101 affecte au chemin primaire protégé une étiquette de secours UAlabel1. Cette étiquette de secours UAlabel1 est destinée à être associée par les noeuds protecteurs en amont et en aval aux paquets qui sont acheminés, en régime normal, par une des branches du chemin primaire reliant le noeud à protéger à un des noeuds protecteurs et lorsque la panne affectant le noeud à protéger est détectée, par le chemin de secours.

Puis, dans une étape d'envoi E3, le noeud protecteur en amont 101 transmet à chaque noeud protecteur en aval une demande de protection. Le noeud protecteur en amont 101, ayant transmis la demande d'ouverture de connexion bidirectionnelle du chemin primaire au noeud 104, connaît l'ensemble des noeuds en aval du noeud 104 dans le chemin primaire. La demande de protection 210 est représentée sur la figure 5. La demande de protection indique, entre autres, le chemin primaire protégé MP2MP 211, le chemin de secours MP2MP 212, l'identifiant 213 du noeud protecteur en amont Id(noeud 101) en tant qu'étiquette de contexte, l'étiquette de secours 214 UAlabel1. Par exemple, dans le protocole RSVP-TE, il s'agit d'un message "Path".

Dans une étape E4, le noeud protecteur en amont 101 reçoit des confirmations d'établissement de la protection en provenance de l'ensemble des noeuds protecteurs en aval. Par exemple, dans le protocole RSVP-TE, il s'agit de messages "Resv".

A l'issue de l'étape E4, le noeud protecteur en amont 101 configure dans une étape E5, des tables qui vont lui permettre d'acheminer les paquets lors de l'apparition de la panne.

Dans une première sous-étape de l'étape E5, le noeud protecteur en amont 101 mémorise dans une table d'acheminement MPLS 301 des sorties de secours visant à encapsuler les paquets acheminés, en régime normal, par une des branches du chemin primaire reliant le noeud à protéger à un des noeuds protecteurs et, lors de la panne affectant le noeud à protéger, par le chemin de secours. Une sortie de secours associe une étiquette d'une branche du chemin primaire à une liste d'étiquettes et à l'identifiant du prochain noeud sur le chemin de secours, ceci pour chaque branche du chemin de secours issue du noeud protecteur en amont et le reliant à un autre noeud. La liste d'étiquettes comprend l'étiquette utilisée sur cette branche du chemin de secours, l'identifiant du noeud protecteur en amont Id(noeud 101), l'étiquette de secours UAlabel1. Un paquet transmis sur la sortie de secours est encapsulé et comprend donc, l'étiquette liée à l'acheminement sur le chemin de secours, l'étiquette de contexte Id(noeud 101) puis de l'étiquette de secours UAlabel1. De plus, cette table comprend une première instruction permettant de traiter un paquet reçu sur une branche du chemin de secours. Cette première instruction permet de supprimer la première étiquette, correspondant à une étiquette liée à l'acheminement sur le chemin de secours, et de lire la deuxième étiquette, à savoir l'étiquette de contexte Id(noeud 101). Une deuxième instruction associée à l'étiquette de contexte renvoie sur une table de commutation d'étiquettes contextuelle 302 associée au noeud protecteur en amont 101.

Dans une deuxième sous-étape de l'étape E5, le noeud protecteur en amont 101 crée ou, si elle existe déjà, met à jour la table de commutation d'étiquettes contextuelle 302 associée à son propre identifiant, à savoir le Id(noeud 101). Dans cette table, il associe à l'étiquette de secours UAlabel1, pour chaque branche du chemin primaire LSP1 issu du noeud protecteur en amont, en dehors de la branche affectée par la panne, une sortie, c'est-à-dire un couple constitué de l'étiquette de sortie associée à cette branche et du prochain noeud.

A titre d'exemple, la table d'acheminement MPLS 301 du noeud 101 contient les instructions suivantes, si l'étiquette d'acheminement sur le chemin de secours est notée 55 :
55 → pop
Id(noeud 101) → pop, go to "table contextuelle associée à l'identifiant".

Quand le noeud protecteur en amont 101 reçoit un paquet sur le chemin de secours étiqueté "55", à l'aide de la table d'acheminement MPLS 301, il dépile la première étiquette à l'aide de la première instruction, lit l'étiquette contextuelle Id(noeud 101) qui permet de pointer sur la table de commutation d'étiquettes contextuelle associée 302 par la deuxième instruction. Dans cette dernière, il lit en fonction de l'étiquette de secours UAlabel1 l'étiquette à associer en sortie ainsi que le prochain noeud.

L'association de cette étiquette de secours UAlabel1 à l'identifiant du noeud protecteur initiateur Id(Noeud 101) permet d'identifier le chemin primaire protégé LSP1. Ainsi, le noeud protecteur en amont peut protéger différents chemins primaires et identifier à partir de paquets reçus sur le chemin de secours, à quel chemin primaire ces paquets étaient initialement destinés.

Lors d'une étape E7, le noeud protecteur en amont 101 détecte un évènement. S'il s'agit d'une détection de la panne affectant le noeud à protéger ou le lien entre le noeud protecteur et le noeud à protéger, le procédé d'initiation d'une protection passe à une étape E9 dans laquelle le noeud protecteur en amont 101 active les sorties de secours de la table d'acheminement MPLS 301 et désactive les sorties nominales. Ainsi, dans le plan de transfert, le noeud protecteur achemine des paquets reçus de la façon suivante :
- les paquets reçus par l'intermédiaire d'une branche du chemin de secours et auxquels l'identifiant du noeud protecteur en amont Id(noeud 101) et l'étiquette de secours UAlabel1 sont associées, sont acheminés, le cas échéant, vers d'autres branches du chemin de secours et vers des branches du chemin primaire issues dudit noeud, à l'exception de la branche reliant le noeud protecteur au noeud donné ;
- les paquets reçus par l'intermédiaire d'une branche du chemin primaire sont acheminés par le chemin de secours après association de l'identifiant du noeud protecteur en amont Id(noeud 101) et de l'étiquette de secours UAlabel1 et le cas échéant, vers d'autres branches du chemin primaire issues du noeud, à l'exception de la branche reliant le noeud protecteur initiateur au noeud donné.

Le procédé d'initiation d'une protection retourne ensuite à l'étape E7 d'attente de détection d'un évènement.

S'il s'agit d'une détection de la disparition de la panne affectant le noeud à protéger, le procédé d'initiation d'une protection passe à une étape E11 dans laquelle le noeud protecteur en amont 101 active les sorties nominales de la table d'acheminement MPLS 301 et désactive les sorties de secours. Le procédé d'initiation d'une protection retourne ensuite à l'étape E7 d'attente de détection d'un évènement.

Le procédé de protection tel qu'il est mis en oeuvre par un noeud protecteur en aval 106, 107 va maintenant être décrit en relation avec la figure 2b toujours dans le premier mode de réalisation, dit mode explicite. On se place par la suite au niveau du noeud protecteur en aval 106.

Dans une étape de réception F3, le noeud protecteur en aval 106 reçoit une demande de protection en provenance du noeud protecteur en amont 101. La demande de protection 210 indique, entre autres, le chemin primaire protégé MP2MP 211, le chemin de secours MP2MP 212, l'identifiant 213 du noeud protecteur en amont Id(noeud 101), l'étiquette de secours 214 UAlabel1. Par exemple, dans le protocole RSVP-TE, il s'agit d'un message "Path".

Dans une étape F4, le noeud protecteur en aval 106 envoie une confirmation d'établissement de la protection au noeud protecteur en amont 101. Par exemple, dans le protocole RSVP-TE, il s'agit de messages "Resv".

A l'issue de l'étape F4, le noeud protecteur en aval 106 configure dans une étape F5, les tables qui vont lui permettre d'acheminer les paquets lors de l'apparition de la panne.

Dans une première sous-étape de l'étape F5, le noeud protecteur en aval 106 mémorise dans sa table d'acheminement MPLS 301 des sorties de secours visant à encapsuler les paquets acheminés, en régime normal, par une des branches du chemin primaire reliant le noeud à protéger à un des noeuds protecteurs et, lors de la panne affectant le noeud à protéger, par le chemin de secours. Une sortie de secours associe une étiquette d'une branche du chemin primaire à une liste d'étiquettes et à l'identifiant du prochain noeud sur le chemin de secours, ceci pour chaque branche du chemin de secours issue du noeud protecteur en aval 106 et le reliant à un autre noeud. La liste d'étiquettes comprend l'étiquette utilisée sur la branche du chemin de secours, l'identifiant Id(noeud 101) du noeud protecteur initiateur 101 et l'étiquette de secours UAlabel1. Un paquet transmis sur la sortie de secours est encapsulé afin d'être acheminé sur le chemin de secours et comprend donc l'étiquette liée à l'acheminement sur le chemin de secours, l'étiquette de contexte Id(noeud 101) suivie de l'étiquette de secours UAlabel1. De plus, cette table comprend une première instruction permettant de traiter un paquet reçu sur une branche du chemin de secours. Cette première instruction permet de supprimer la première étiquette, correspondant à une étiquette liée à l'acheminement sur le chemin de secours, et de lire la deuxième étiquette, à savoir l'étiquette de contexte Id(noeud 101). Une deuxième instruction associée à l'étiquette de contexte renvoie sur une table de commutation d'étiquettes contextuelle 302 associée au noeud protecteur en amont 101.

Dans une deuxième sous-étape de l'étape F5, le noeud protecteur en aval 106 crée ou, si elle existe, met à jour la table de commutation d'étiquettes contextuelle 302 associée à l'identifiant du noeud protecteur initiateur Id(noeud 101). Dans cette table, il associe à l'étiquette de secours UAlabel1, pour chaque branche du chemin primaire LSP1 issu du noeud protecteur en aval 106, en dehors de la branche affectée par la panne, une sortie, c'est-à-dire un couple constitué de l'étiquette de sortie associée à cette branche et du prochain noeud.

Le traitement effectué par le noeud protecteur en aval lorsqu'il reçoit un paquet sur le chemin de secours est identique à celui qui a été décrit au noeud protecteur en amont 101.

Lors d'une étape F7, le noeud protecteur en aval 106 détecte un évènement. S'il s'agit d'une détection de la panne affectant le noeud à protéger ou le lien reliant le noeud protecteur au noeud à protéger, le procédé de protection passe à une étape F9 dans laquelle le noeud protecteur en aval 106 active les sorties de secours de la table d'acheminement MPLS et désactive les sorties nominales. Dans le plan de transfert, l'acheminement des paquets se passe de façon identique à celui décrit au noeud protecteur en amont 101 Le procédé de protection retourne ensuite à l'étape F7 d'attente de détection d'un évènement.

S'il s'agit d'une détection de la disparition de la panne affectant le noeud à protéger, le procédé de protection passe à une étape F11 dans laquelle le noeud protecteur en aval 106 active les sorties nominales de la table d'acheminement MPLS et désactive les sorties de secours. Le procédé de protection retourne ensuite à l'étape F7 d'attente de détection d'un évènement.

Dans l'exemple de la figure 3, à l'issue de l'établissement de la protection par le noeud protecteur en amont 101 visant à protéger le noeud 104, les noeuds protecteurs en aval 106 et 107 ont créé ou mis à jour chacun une table de commutation d'étiquettes contextuelle associée au noeud protecteur en amont 101.

Il est à noter que dans ce premier mode de réalisation l'étiquette de contexte est envoyée de façon explicite aux noeuds protecteurs en aval.

Dans un deuxième mode de réalisation, dit mode implicite, l'identifiant du noeud protecteur en amont Id(noeud 101) n'est pas transmis dans la demande de protection. Seule l'étiquette de secours affectée lors de l'étape E1 d'affectation d'une étiquette de secours est associée aux paquets destinés à être acheminés par une des branches du chemin primaire reliant le noeud donné à un des noeuds protecteurs et acheminés par le chemin de secours lors de la panne, en complément de l'étiquette associée à l'acheminement par le chemin de secours. La demande de protection 210 indique, entre autres, le chemin primaire protégé MP2MP 211, le chemin de secours MP2MP 212 et l'étiquette de secours 214 UAlabel1

Dans ce cas, un noeud protecteur 101, 105, 106 recevant un paquet sur le chemin de secours en déduit implicitement que la table de commutation d'étiquettes contextuelle associée au noeud protecteur en amont 101 doit être consultée. En effet, le noeud protecteur 101 en amont est le noeud qui a initié l'établissement du chemin de secours, c'est-à-dire le noeud racine du chemin de secours.

Lors de la première sous-étape de l'étape E5 (respectivement F5), le noeud protecteur en amont 101 (respectivement en aval 106) mémorise dans sa table d'acheminement MPLS 301 des sorties de secours visant à encapsuler les paquets acheminés, en régime normal, par une des branches du chemin primaire reliant le noeud à protéger à un des noeuds protecteurs et, lors de la panne affectant le noeud à protéger, par le chemin de secours. Une sortie de secours associe une étiquette d'une branche du chemin primaire à une liste d'étiquettes et à l'identifiant du prochain noeud sur le chemin de secours, ceci pour chaque branche du chemin de secours issue du noeud protecteur en amont 101 (respectivement en aval 106) et le reliant à un autre noeud. La liste d'étiquettes comprend l'étiquette utilisée sur la branche du chemin de secours et l'étiquette de secours UAlabel1. Un paquet transmis sur la sortie de secours est encapsulé afin d'être acheminé sur le chemin de secours et comprend donc l'étiquette liée à l'acheminement sur le chemin de secours, l'étiquette de secours UAlabel1. De plus, cette table comprend une instruction permettant de traiter un paquet reçu sur une branche du chemin de secours. Cette instruction permet de supprimer la première étiquette, correspondant à une étiquette liée à l'acheminement sur le chemin de secours et de consulter la table de commutation d'étiquettes contextuelle liée au noeud protecteur en amont 101.

Ainsi, lors de la détection de la panne, dans le plan de transfert, les noeuds protecteurs acheminent des paquets reçus de la façon suivante :
- les paquets reçus par l'intermédiaire d'une branche du chemin de secours et auxquels l'étiquette de secours UAlabell est associée, sont acheminés, le cas échéant, vers d'autres branches de l'arbre de secours et vers des branches du chemin primaire issues dudit noeud, à l'exception de la branche reliant le noeud protecteur au noeud donné ;
- les paquets reçus par l'intermédiaire d'une branche du chemin primaire sont acheminés par le chemin de secours après association de l'étiquette de secours UAlabel1 et le cas échéant, vers d'autres branches du chemin primaire issues du noeud, à l'exception de la branche reliant le noeud protecteur initiateur au noeud donné.

Le noeud protecteur en amont 101 peut initier la protection de plusieurs chemins primaires, aptes à utiliser le même chemin de secours grâce à l'utilisation de l'étiquette de secours qu'il a affectée localement.

On notera que les agencements des tables d'acheminement MPLS 301 et des tables contextuelles 302 sont donnés à titre d'exemple non limitatif et que les procédés selon l'invention peuvent être adaptés à l'aide de tables configurées différemment mais permettant d'acheminer les paquets de la manière décrite.

L'invention concerne donc également un procédé d'acheminement de paquets lors d'une panne affectant un noeud donné 104 d'un chemin à commutation d'étiquettes primaire multipoint à multipoint en mode connecté dans un réseau de communication par commutation d'étiquettes, dans lequel le chemin primaire est protégé par un chemin à commutation d'étiquettes de secours multipoint à multipoint en mode connecté, le réseau comprenant des noeuds d'acheminement organisés suivant le chemin primaire, le chemin primaire étant adapté pour faire communiquer entre eux une pluralité de noeuds d'extrémité et comprenant des branches reliant lés noeuds d'acheminement deux à deux à partir d'un noeud racine jusqu'aux noeuds d'extrémité, le chemin de secours étant adapté pour faire communiquer entre eux un ensemble de noeuds protecteurs constitué du noeud en amont 101 et des noeuds en aval 105, 106 du noeud donné, une étiquette de secours étant affectée au chemin primaire protégé,
dans lequel, les noeuds protecteurs acheminent des paquets reçus de la façon suivante :
- des paquets reçus par l'intermédiaire d'une branche du chemin de secours et auxquels l'étiquette de secours est associée, sont acheminés, le cas échéant, vers d'autres branches du chemin de secours et vers des branches du chemin primaire issues dudit noeud, à l'exception de la branche reliant le noeud protecteur au noeud donné ;
- des paquets reçus par l'intermédiaire d'une branche du chemin primaire sont acheminés par le chemin de secours après association de l'étiquette de secours et le cas échéant, vers d'autres branches du chemin primaire issues du noeud, à l'exception de la branche reliant le noeud protecteur au noeud donné.

Un noeud protecteur 300 selon un mode particulier de réalisation de l'invention va maintenant être décrit en relation avec la figure 4.

Le noeud protecteur 300 est agencé pour protéger un chemin à commutations d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, adapté pour faire communiquer entre eux un ensemble de noeuds protecteurs constitué du noeud protecteur en amont et des noeuds protecteurs en aval du noeud donné. Le noeud 300 appartient aux chemins primaires et de secours. Il comprend :
- une table d'acheminement MPLS 301,
- au moins une table de commutation d'étiquettes contextuelle 302 ;
- un module 304 de protection, agencé pour envoyer à un autre noeud protecteur ou pour recevoir d'un autre noeud protecteur une demande de protection, la demande de protection 210 indiquant un chemin primaire, un chemin de secours et au moins une étiquette de secours à associer par les noeuds protecteurs de l'ensemble aux paquets destinés à être acheminés par une des branches du chemin primaire reliant le noeud à protéger à un des noeuds protecteurs de l'ensemble et acheminés par le chemin de secours lors d'une panne affectant le noeud donné ;
- un module 306 de configuration de la table d'acheminement MPLS 301 et de la table de commutation d'étiquettes contextuelle 302 en fonction d'informations transmises ou reçues dans une demande de protection;
- un module 307 de commutation des sorties, vers les sorties de secours de la table d'acheminement MPLS 301 en cas de détection de la panne, et vers les sorties nominales de la table d'acheminement MPLS 301 lors du retour en régime normal.

Le noeud protecteur 300, jouant le rôle de noeud protecteur en amont et initiant la protection, peut également comprendre :
- un module 305 de commande, agencés pour commander le module 304 de protection pour l'ensemble des noeuds protecteurs en aval du noeud donné ;
- un module 309 d'affectation d'une étiquette de secours, agencé pour affecter une étiquette de secours à un chemin primaire, l'étiquette de secours étant destinée à être associée par les noeuds protecteurs de l'ensemble aux paquets destinés à être acheminés par une des branches du chemin primaire reliant le noeud à protéger à un des noeuds protecteurs de l'ensemble et acheminés par le chemin de secours lors d'une panne affectant le noeud donné.

Les noeuds protecteurs tels que décrits précédemment comprennent en outre un module 310 d'acheminement des paquets dans le plan de transfert en fonction des sorties sélectionnées par le module 307.

L'invention concerne également un système de conmmnication agencé pour protéger un chemin à commutations d'étiquettes primaire multipoint à multipoint en mode connecté lors d'une panne affectant un noeud donné de ce chemin dans un réseau de communication par commutation d'étiquettes, par un chemin à commutation d'étiquettes de secours multipoint à multipoint en mode connecté, adapté pour faire communiquer entre eux un ensemble de noeuds protecteurs constitué du noeud en amont et des noeuds en aval du noeud donné. Le système comprend ;
- un premier noeud protecteur 300, jouant le rôle de noeud protecteur en amont initiant la protection, tel que décrit précédemment ;
- au moins un deuxième noeud protecteur 300 aval tel que décrit précédemment.

Les modules 304, 305, 306, 307, 309 et 310 sont agencés pour mettre en oeuvre les procédés précédemment décrits. Il s'agit de préférence de modules logiciels comprenant des instructions logicielles pour faire exécuter les étapes des procédés précédemment décrits, mises en oeuvre par un noeud du réseau de communication à commutation d'étiquettes. L'invention concerne donc aussi :
- un programme pour noeud amont d'un réseau de communication à commutation d'étiquettes, pour protéger un chemin à commutation d'étiquettes multipoint à multipoint en mode connecté par un chemin à commutation d'étiquettes de secours multipoint à multipoint en mode connecté lors d'une panne affectant un noeud donné du chemin primaires, comprenant des instructions de programme destinées à commander l'exécution des étapes du procédé d'initiation d'une protection précédemment décrit qui sont exécutées par le noeud, lorsque le programme est exécuté par celui-ci ;
- un support d'enregistrement lisible par un noeud d'un réseau de communication à commutation d'étiquettes sur lequel est enregistré le programme pour noeud amont d'un réseau de communication à commutation d'étiquettes.

L'invention concerne également :
- un programme pour noeud aval d'un réseau de communication à commutation d'étiquettes, pour protéger un chemin à commutation d'étiquettes multipoint à multipoint en mode connecté par un chemin à commutation d'étiquettes de secours multipoint à multipoint en mode connecté lors d'une panne affectant un noeud donné du chemin primaire, comprenant des instructions de programme destinées à commander l'exécution des étapes du procédé de protection précédemment décrit qui sont exécutées par le noeud, lorsque le programme est exécuté par celui-ci ;
- un support d'enregistrement lisible par un noeud d'un réseau de communication à commutation d'étiquettes sur lequel est enregistré le programme pour noeud aval d'un réseau de communication à commutation d'étiquettes.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé d'initiation amont, d'une protection d'un chemin à commutation d'étiquettes primaire multipoint à multipoint en mode connecté lors d'une panne affectant un noeud donné (104) dudit chemin dans un réseau de communication par commutation d'étiquettes, par un chemin à commutation d'étiquettes de secours multipoint à multipoint en mode connecté, ledit réseau comprenant des noeuds d'acheminement organisés suivant le chemin primaire, le chemin primaire étant adapté pour faire communiquer entre eux une pluralité de noeuds d'extrémité et comprenant des branches reliant les noeuds d'acheminement deux à deux à partir d'un noeud racine jusqu'aux noeuds d'extrémité, le noeud racine ayant la liste des noeuds d'extrémités et les routes explicites sur lesquelles lesdites branches s'appuient, un premier noeud envoyant une demande d'ouverture de connexion bi-directionnelle à un deuxième noeud est appelé noeud amont, ledit deuxième noeud étant appelé noeud aval, un message de demande d'ouverture de connexion bi-directionnelle comprenant la liste des routes explicites du chemin à commutation d'étiquettes à destination des différents noeuds d'extrémité, un noeud ayant demandé l'ouverture avec le noeud donné d'une connexion bi-directionnelle étant appelé noeud protecteur en amont du noeud donné, un noeud auquel le noeud donné a demandé l'ouverture d'une connexion bi-directionnelle étant appelé noeud protecteur en aval du noeud donné, le chemin de secours ayant été initialement établi entre un noeud protecteur (101) en amont du noeud donné et des noeuds protecteurs (105, 106) en aval du noeud donné, le noeud protecteur en amont du noeud donné ayant demandé l'ouverture d'une connexion bi-directionnelle avec les noeuds protecteurs en aval du noeud donné, ledit noeud protecteur amont jouant le rôle de noeud racine dans l'établissement de ce chemin de secours,
ledit procédé comprenant les étapes suivantes mises en oeuvre par le noeud protecteur en amont du noeud donné, le chemin de secours étant adapté pour faire communiquer entre eux un.ensemble de noeuds protecteurs constitué du noeud en amont (101) et des noeuds en aval (105, 106) du noeud donné :
- une étape (E1) d'affectation d'une étiquette de secours à associer par les noeuds protecteurs de l'ensemble aux paquets destinés à être acheminés par une des branches du chemin primaire reliant le noeud donné à un des noeuds protecteurs de l'ensemble et acheminés par le chemin de secours lors de la panne ;
- une étape (E3) d'envoi d'une demande de protection à un des noeuds protecteurs en aval du noeud donné, ladite demande de protection indiquant le chemin primaire, le chemin de secours et l'étiquette de secours affectée,
ladite étape d'envoi étant réitérée pour l'ensemble des noeuds protecteurs en aval du noeud donné,
- une étape (E5) de configuration d'une table de commutation d'étiquettes contextuelle destinée à être utilisée lors de la panne, ladite table associant à l'étiquette de secours, pour chaque branche du chemin primaire issue du noeud protecteur, en dehors de la branche affectée par la panne, une sortie vers le chemin primaire.

2. Procédé selon la revendication 1, dans lequel ladite demande de protection comprend en outre un identifiant du noeud protecteur en amont à associer en tant qu'étiquette auxdits paquets en complément de l'étiquette de secours.

3. Procédé d'initiation aval, d'une protection d'un chemin à commutation d'étiquettes primaire multipoint à multipoint en mode connecté lors d'une panne affectant un noeud donné (104) dudit chemin dans un réseau de communication par commutation d'étiquettes, par un chemin à commutation d'étiquettes de secours multipoint à multipoint en mode connecté, ledit réseau comprenant des noeuds d'acheminement organisés suivant le chemin primaire, le chemin primaire étant adapté pour faire communiquer entre eux une pluralité de noeuds d'extrémité et comprenant des branches reliant les noeuds d'acheminement deux à deux à partir d'un noeud racine jusqu'aux noeuds d'extrémité, le noeud racine ayant la liste des noeuds d'extrémités et les routes explicites sur lesquelles lesdites branches s'appuient, un premier noeud envoyant une demande d'ouverture de connexion bi-directionnelle à un deuxième noeud est appelé noeud amont, ledit deuxième noeud étant appelé noeud aval, un message de demande d'ouverture de connexion bi-directionnelle comprenant la liste des routes explicites du chemin à commutation d'étiquettes à destination des différents noeuds d'extrémité, un noeud ayant demandé l'ouverture avec le noeud donné d'une connexion bi-directionnelle étant appelé noeud protecteur en amont du noeud donné, un noeud auquel le noeud donné a demandé l'ouverture d'une connexion bi-directionnelle étant appelé noeud protecteur en aval du noeud donné, le chemin de secours ayant été initialement établi entre un noeud protecteur (101) en amont du noeud donné et des noeuds protecteurs (105, 106) en aval du noeud donné, le noeud protecteur en amont du noeud donné ayant demandé l'ouverture d'une connexion bi-directionnelle avec les noeuds protecteurs en aval du noeud donné, ledit noeud protecteur amont jouant le rôle de noeud racine dans l'établissement de ce chemin de secours,
ledit procédé comprenant les étapes suivantes mises en oeuvre par un noeud protecteur en aval du noeud donné, le chemin de secours étant adapté pour faire communiquer entre eux un ensemble de noeuds protecteurs constitué du noeud en amont et des noeuds en aval du noeud donné :
- une étape (F3) de réception d'une demande de protection en provenance du noeud protecteur en amont du noeud donné, ladite demande de protection indiquant le chemin primaire, le chemin de secours et une étiquette de secours à associer par les noeuds protecteurs de l'ensemble aux paquets destinés à être acheminés par une des branches du chemin primaire reliant le noeud donné à un des noeuds protecteurs de l'ensemble et acheminés par le chemin de secours lors de la panne,
- une étape (F5) de configuration d'une table de commutation d'étiquettes contextuelle destinée à être utilisée lors de la panne, ladite table associant à l'étiquette de secours, pour chaque branche du chemin primaire issue du noeud protecteur, en dehors de la branche affectée par la panne, une sortie vers le chemin primaire.

4. Procédé selon la revendication 3, dans lequel ladite demande de protection comprend en outre un identifiant du noeud protecteur en amont à associer en tant qu'étiquette auxdits paquets en complément de l'étiquette de secours.

5. Procédé d'acheminement de paquets lors d'une panne affectant un noeud donné (104) d'un chemin à commutation d'étiquettes primaire multipoint à multipoint en mode connecté dans un réseau de communication par commutation d'étiquettes, dans lequel ledit chemin primaire est protégé par un chemin à commutation d'étiquettes de secours multipoint à multipoint en mode connecté, ladite protection ayant été initiée selon les revendications 1 et 3,
dans lequel, les noeuds protecteurs acheminent des paquets reçus de la façon suivante:
- des paquets reçus par l'intermédiaire d'une branche du chemin de secours et auxquels l'étiquette de secours est associée, sont acheminés, le cas échéant, vers d'autres branches du chemin de secours et vers des branches du chemin primaire issues dudit noeud, à l'exception de la branche reliant le noeud protecteur au noeud donné ;
- des paquets reçus par l'intermédiaire d'une branche du chemin primaire sont acheminés par le chemin de secours après association de l'étiquette de secours et le cas échéant, vers d'autres branches du chemin primaire issues du noeud, à l'exception de la branche reliant le noeud protecteur au noeud donné.

6. Noeud protecteur amont (300) pour protéger un chemin à commutations d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, comprenant des moyens (309, 304, 305, 306) agencés pour mettre en oeuvre les étapes selon la revendication 1.

7. Noeud protecteur aval (300) pour protéger un chemin à commutations d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, comprenant des moyens (304, 306) agencés pour mettre en oeuvre les étapes selon la revendication 3.

8. Système de communication agencé pour protéger un chemin à commutations d'étiquettes primaire multipoint à multipoint en mode connecté lors d'une panne affectant un noeud donné dudit chemin dans un réseau de communication par commutation d'étiquettes, par un chemin à commutation d'étiquettes de secours multipoint à multipoint en mode connecté, un noeud ayant demandé l'ouverture avec le noeud donné d'une connexion bi-directionnelle étant appelé noeud protecteur en amont du noeud donné, un noeud auquel le noeud donné a demandé l'ouverture d'une connexion bi-directionnelle étant appelé noeud protecteur en aval du noeud donné, le chemin de secours ayant été initialement établi entre un noeud protecteur (101) en amont du noeud donné et des noeuds protecteurs (105, 106) en aval du noeud donné, le noeud protecteur en amont du noeud donné ayant demandé l'ouverture d'une connexion bi-directionnelle avec les noeuds protecteurs en aval du noeud donné, adapté pour faire communiquer entre eux un ensemble de noeuds protecteurs constitué du noeud en amont et des noeuds en aval du noeud donné, ledit système comprenant ;
- un noeud protecteur amont selon la revendication 6 ;
- au moins un noeud protecteur aval selon la revendication 7.

9. Programme pour noeud amont d'un réseau de communication à commutation d'étiquettes, pour protéger un chemin à commutation d'étiquettes multipoint à multipoint en mode connecté par un chemin à commutation d'étiquettes de secours multipoint à multipoint en mode connecté lors d'une panne affectant un noeud donné dudit chemin primaire, comprenant des instructions de programme destinées à commander l'exécution des étapes du procédé d'initiation d'une protection selon la revendication 1 qui sont exécutées par ledit noeud, lorsque ledit programme est exécuté par celui-ci.

10. Support d'enregistrement lisible par un noeud d'un réseau de communication à commutation d'étiquettes sur lequel est enregistré le programme selon la revendication 9.

11. Programme pour noeud aval d'un réseau de communication à commutation d'étiquettes, pour protéger un chemin à commutation d'étiquettes multipoint à multipoint en mode connecté par un chemin à commutation d'étiquettes de secours multipoint à multipoint en mode connecté lors d'une panne affectant un noeud donné dudit chemin primaire, comprenant des instructions de programme destinées à commander l'exécution des étapes du procédé de protection selon la revendication 3 qui sont exécutées par ledit noeud, lorsque ledit programme est exécuté par celui-ci.

12. Support d'enregistrement lisible par un noeud d'un réseau de communication à commutation d'étiquettes sur lequel est enregistré le programme selon la revendication 11.

## Patentansprüche

1. Verfahren zur stromaufwärtigen Initiierung eines Schutzes eines Multipunkt-zu-Multipunkt-Label-Switching-Primärpfads im Verbindungsmodus, bei einer einen gegebenen Knoten (104) des Pfads in einem Label-Switching-Kommunikationsnetz betreffenden Störung, durch einen Multipunkt-zu-Multipunkt-Label-Switching-Hilfspfad im Verbindungsmodus, wobei das Netz Weiterleitungsknoten enthält, die entlang des Primärpfads angeordnet sind, wobei der Primärpfad geeignet ist, eine Vielzahl von Endknoten miteinander kommunizieren zu lassen, und Zweige enthält, die die Weiterleitungsknoten paarweise ausgehend von einem Wurzelknoten bis zu den Endknoten verbinden, wobei der Wurzelknoten die Liste der Endknoten und die expliziten Routen hat, auf die die Zweige sich stützen, wobei ein erster Knoten, der eine Öffnungsanforderung einer Zweiwegverbindung an einen zweiten Knoten schickt, stromaufwärtiger Knoten genannt wird, wobei der zweite Knoten stromabwärtiger Knoten genannt wird, wobei eine Öffnungsanforderungsmitteilung einer Zweiwegverbindung die Liste der expliziten Routen des Label-Switching-Pfads zu den verschiedenen Endknoten enthält, wobei ein Knoten, der die Öffnung einer Zweiwegverbindung mit dem gegebenen Knoten angefordert hat, Schutzknoten stromaufwärts vor dem gegebenen Knoten genannt wird, wobei ein Knoten, von dem der gegebene Knoten die Öffnung einer Zweiwegverbindung angefordert hat, Schutzknoten stromabwärts hinter dem gegebenen Knoten genannt wird, wobei der Hilfspfad anfangs zwischen einem Schutzknoten (101) stromaufwärts vor dem gegebenen Knoten und den Schutzknoten (105, 106) stromabwärts hinter dem gegebenen Knoten festgelegt wurde, wobei der Schutzknoten stromaufwärts vor dem gegebenen Knoten die Öffnung einer Zweiwegverbindung mit den Schutzknoten stromabwärts hinter dem gegebenen Knoten angefordert hat, wobei der stromaufwärtige Schutzknoten die Aufgabe eines Wurzelknotens beim Festlegen dieses Hilfspfads hat,
wobei das Verfahren die folgenden Schritte enthält, die vom Schutzknoten stromaufwärts vor dem gegebenen Knoten angewendet werden, wobei der Hilfspfad geeignet ist, eine aus dem Knoten (101) stromaufwärts vor dem gegebenen Knoten und den Knoten (105, 106) stromabwärts hinter dem gegebenen Knoten bestehende Einheit von Schutzknoten miteinander kommunizieren zu lassen:
- einen Schritt (E1) der Zuweisung eines Hilfslabels, das durch die Schutzknoten der Einheit den Paketen zuzuordnen ist, die dazu bestimmt sind, von einem der Zweige des Primärpfads weitergeleitet zu werden, der den gegebenen Knoten mit einem der Schutzknoten der Einheit verbindet, und die bei der Störung vom Hilfspfad weitergeleitet werden;
- einen Schritt (E3) des Sendens einer Schutzanforderung an einen der Schutzknoten stromabwärts hinter dem gegebenen Knoten, wobei die Schutzanforderung den Primärpfad, den Hilfspfad und das zugewiesene Hilfslabel angibt, wobei der Sendeschritt für die Gesamtheit der Schutzknoten stromabwärts hinter dem gegebenen Knoten wiederholt wird,
- einen Schritt (E5) der Konfiguration einer Label-Switching-Kontexttabelle, die dazu bestimmt ist, während der Störung verwendet zu werden, wobei die Tabelle dem Hilfslabel, für jeden vom Schutzknoten stammenden Zweig des Primärpfads abgesehen vom von der Störung betroffenen Zweig, einen Ausgang zum Primärpfad zuordnet.

2. Verfahren nach Anspruch 1, wobei die Schutzanforderung außerdem eine Kennung des stromaufwärtigen Schutzknotens enthält, die als Label den Paketen als Ergänzung des Hilfslabels zuzuordnen ist.

3. Verfahren zur stromabwärtigen Initiierung eines Schutzes eines Multipunkt-zu-Multipunkt-Label-Switching-Primärpfads im Verbindungsmodus, bei einer einen gegebenen Knoten (104) des Pfads in einem Label-Switching-Kommunikationsnetz betreffenden Störung, durch einen Multipunkt-zu-Multipunkt-Label-Switching-Hilfspfad im Verbindungsmodus, wobei das Netz Weiterleitungsknoten enthält, die entlang des Primärpfads angeordnet sind, wobei der Primärpfad geeignet ist, eine Vielzahl von Endknoten miteinander kommunizieren zu lassen, und Zweige enthält, die die Weiterleitungsknoten paarweise ausgehend von einem Wurzelknoten bis zu den Endknoten verbinden, wobei der Wurzelknoten die Liste der Endknoten und die expliziten Routen hat, auf die die Zweige sich stützen, wobei ein erster Knoten, der eine Öffnungsanforderung einer Zweiwegverbindung an einen zweiten Knoten schickt, stromaufwärtiger Knoten genannt wird, wobei der zweite Knoten stromabwärtiger Knoten genannt wird, wobei eine Öffnungsanforderungsmitteilung einer Zweiwegverbindung die Liste der expliziten Routen des Label-Switching-Pfads zu den verschiedenen Endknoten enthält, wobei ein Knoten, der die Öffnung einer Zweiwegverbindung mit dem gegebenen Knoten angefordert hat, Schutzknoten stromaufwärts vor dem gegebenen Knoten genannt wird, wobei ein Knoten, von dem der gegebene Knoten die Öffnung einer Zweiwegverbindung angefordert hat, Schutzknoten stromabwärts hinter dem gegebenen Knoten genannt wird, wobei der Hilfspfad anfangs zwischen einem Schutzknoten (101) stromaufwärts vor dem gegebenen Knoten und den Schutzknoten (105, 106) stromabwärts hinter dem gegebenen Knoten festgelegt wurde, wobei der Schutzknoten stromaufwärts vor dem gegebenen Knoten die Öffnung einer Zweiwegverbindung mit den Schutzknoten stromabwärts hinter dem gegebenen Knoten angefordert hat, wobei der stromaufwärtige Schutzknoten die Aufgabe eines Wurzelknotens beim Festlegen dieses Hilfspfads hat,
wobei das Verfahren die folgenden Schritte enthält, die von einem Schutzknoten stromabwärts hinter dem gegebenen Knoten angewendet werden, wobei der Hilfspfad geeignet ist, eine aus dem Knoten stromaufwärts vor dem gegebenen Knoten und den Knoten stromabwärts hinter dem gegebenen Knoten bestehende Einheit von Schutzknoten miteinander kommunizieren zu lassen:
- einen Schritt (F3) des Empfangs einer Schutzanforderung vom Schutzknoten stromaufwärts vor dem gegebenen Knoten, wobei die Schutzanforderung den Primärpfad, den Hilfspfad und ein Hilfslabel angibt, die von den Schutzknoten der Einheit den Paketen zuzuordnen sind, die dazu bestimmt sind, von einem der Zweige des Primärpfads weitergeleitet zu werden, der den gegebenen Knoten mit einem der Schutzknoten der Einheit verbindet, und während der Störung vom Hilfspfad weitergeleitet zu werden,
- einen Schritt (F5) der Konfiguration einer Label-Switching-Kontexttabelle, die dazu bestimmt ist, während der Störung verwendet zu werden, wobei die Tabelle dem Hilfslabel, für jeden vom Schutzknoten stammenden Zweig des Primärpfads abgesehen von dem von der Störung betroffenen Zweig, einen Ausgang zum Primärpfad zuordnet.

4. Verfahren nach Anspruch 3, wobei die Schutzanforderung außerdem eine Kennung des stromaufwärtigen Schutzknotens enthält, die als Label den Paketen als Ergänzung des Hilfslabels zuzuordnen ist.

5. Verfahren zur Weiterleitung von Paketen bei einer einen gegebenen Knoten (104) eines Multipunkt-zu-Multipunkt-Label-Switching-Primärpfads im Verbindungsmodus in einem Label-Switching-Kommunikationsnetz betreffenden Störung, wobei der Primärpfad von einem Multipunkt-zu-Multipunkt-Label-Switching-Hilfspfad im Verbindungsmodus geschützt wird, wobei der Schutz gemäß den Ansprüchen 1 und 3 initiiert wurde, wobei die Schutzknoten empfangene Pakete folgendermaßen weiterleiten:
- mittels eines Zweigs des Hilfspfads empfangene Pakete und denen das Hilfslabel zugeordnet ist werden ggf. zu anderen Zweigen des Hilfspfads und zu von dem Knoten stammenden Zweigen des Primärpfads weitergeleitet, mit Ausnahme des Zweigs, der den Schutzknoten mit dem gegebenen Knoten verbindet;
- mittels eines Zweigs des Primärpfads empfangene Pakete werden vom Hilfspfad nach Zuordnung des Hilfslabels und ggf. zu anderen vom Knoten stammenden Zweigen des Primärpfads weitergeleitet, mit Ausnahme des Zweigs, der den Schutzknoten mit dem gegebenen Knoten verbindet.

6. Stromaufwärtiger Schutzknoten (300) zum Schutz eines Multipunkt-zu-Multipunkt-Label-Switching-Primärpfads im Verbindungsmodus bei einer einen gegebenen Knoten des Pfads in einem Label-Switching-Kommunikationsnetz betreffenden Störung durch einen Multipunkt-zu-Multipunkt-Label-Switching-Hilfspfad im Verbindungsmodus, der Einrichtungen (309, 304, 305, 306) enthält, die eingerichtet sind, um die Schritte nach Anspruch 1 anzuwenden.

7. Stromabwärtiger Schutzknoten (300) zum Schutz eines Multipunkt-zu-Multipunkt-Label-Switching-Primärpfads im Verbindungsmodus bei einer einen gegebenen Knoten des Pfads in einem Label-Switching-Kommunikationsnetz betreffenden Störung durch einen Multipunkt-zu-Multipunkt-Label-Switching-Hilfspfad im Verbindungsmodus, der Einrichtungen (304, 306) enthält, die eingerichtet sind, um die Schritte nach Anspruch 3 anzuwenden.

8. Kommunikationssystem, das eingerichtet ist, um einen Multipunkt-zu-Multipunkt-Label-Switching-Primärpfad im Verbindungsmodus bei einer einen gegebenen Knoten des Pfads in einem Label-Switching-Kommunikationsnetz betreffenden Störung durch einen Multipunkt-zu-Multipunkt-Label-Switching-Hilfspfad im Verbindungsmodus zu schützen, wobei ein Knoten, der die Öffnung einer Zweiwegverbindung mit dem gegebenen Knoten angefordert hat, Schutzknoten stromaufwärts vor dem gegebenen Knoten genannt wird, wobei ein Knoten, von dem der gegebene Knoten die Öffnung einer Zweiwegverbindung angefordert hat, Schutzknoten stromabwärts hinter dem gegebenen Knoten genannt wird, wobei der Hilfspfad anfangs zwischen einem Schutzknoten (101) stromaufwärts vor dem gegebenen Knoten und den Schutzknoten (105, 106) stromabwärts hinter dem gegebenen Knoten festgelegt wurde, wobei der Schutzknoten stromaufwärts vor dem gegebenen Knoten die Öffnung einer Zweiwegverbindung mit den Schutzknoten stromabwärts hinter dem gegebenen Knoten angefordert hat, geeignet, um eine aus dem Knoten stromaufwärts vor dem gegebenen Knoten und den Knoten stromabwärts hinter dem gegebenen Knoten bestehende Einheit von Schutzknoten miteinander kommunizieren zu lassen, wobei das System enthält:
- einen stromaufwärtigen Schutzknoten nach Anspruch 6;
- mindestens einen stromabwärtigen Schutzknoten nach Anspruch 7.

9. Programm für einen stromaufwärtigen Knoten eines Label-Switching-Kommunikationsnetzes, um einen Multipunkt-zu-Multipunkt-Label-Switching-Pfad im Verbindungsmodus durch einen Multipunkt-zu-Multipunkt-Label-Switching-Hilfspfad im Verbindungsmodus während einer einen gegebenen Knoten des Primärpfads betreffenden Störung zu schützen, das Programmanweisungen enthält, die dazu bestimmt sind, die Ausführung der Schritte des Initiierungsverfahrens eines Schutzes nach Anspruch 1 zu befehlen, die von dem Knoten ausgeführt werden, wenn das Programm von diesem ausgeführt wird.

10. Aufzeichnungsträger, der von einem Knoten eines Kommunikationsnetzes mit Label-Switching lesbar ist, auf dem das Programm nach Anspruch 9 aufgezeichnet ist.

11. Programm für einen stromabwärtigen Knoten eines Label-Switching-Kommunikationsnetzes, um einen Multipunkt-zu-Multipunkt-Label-Switching-Pfad im Verbindungsmodus durch einen Multipunkt-zu-Multipunkt-Label-Switching-Hilfspfad im Verbindungsmodus bei einer einen gegebenen Knoten des Primärpfads betreffenden Störung zu schützen, das Programmanweisungen enthält, die dazu bestimmt sind, die Ausführung der Schritte des Schutzverfahrens nach Anspruch 3 zu befehlen, die von dem Knoten ausgeführt werden, wenn das Programm von diesem ausgeführt wird.

12. Aufzeichnungsträger, der von einem Knoten eines Label-Switching-Kommunikationsnetzes lesbar ist, auf dem das Programm nach Anspruch 11 aufgezeichnet ist.

## Claims

1. Method for upstream initiation, in a label switching communication network, of protection of a connected-mode multipoint-to-multipoint primary label switching path, during a failure affecting a given node (104) of said path, with a connected-mode multipoint-to-multipoint standby label switching path, said network comprising routing nodes organized into the primary path, the primary path being suitable for having a plurality of egress nodes communicate with one another and comprising links connecting the routing nodes in pairs from an ingress node to an egress node, the ingress node having the list of egress nodes and the explicit routes followed by said links, a first node sending a bidirectional-connection open request to a second node is called the upstream node, said second node being called the downstream node, a bidirectional-connection open request message comprising the list of the explicit routes of the label switching path to the various egress nodes, a node having made a request to the given node for a bidirectional connection to be opened being called the upstream protective node of the given node, a node to which the given node has made a request to open a bidirectional connection being called the downstream protective node of the given node, the standby path having been initially established between an upstream protective node (101) of the given node and downstream protective nodes (105, 106) of the given node, the upstream protective node of the given node having made a request for a bidirectional connection to be opened with the downstream protective nodes of the given node, said upstream protective node playing the role of ingress node in the establishment of this standby path,
said method comprising the following steps implemented by the upstream protective node of the given node, the standby path being suitable for having communicate with one another a set of protective nodes consisting of the upstream node (101) and downstream nodes (105, 106) of the given node:
- a step (E1) of assigning a standby label to be associated, by the protective nodes of the set, with packets intended to be routed via one of the links of the primary path connecting the given node to one of the protective nodes of the set and to be routed by the standby path during the failure;
- a step (E3) of sending a protection request to one of the downstream protective nodes of the given node, said protection request indicating the primary path, the standby path and the assigned standby label,
said sending step being reiterated for the set of downstream protective nodes of the given node,
- a step (E5) of configuring a contextual label switching table intended to be used during the failure, said table associating with the standby label, for each primary-path link emanating from the protective node, except for the link affected by the failure, an exit toward the primary path.

2. Method according to Claim 1, wherein said protection request furthermore comprises an identifier of the upstream protective node to be associated by way of label with said packets in addition to the standby label.

3. Method for downstream initiation, in a label-switching communication network, of protection of a connected-mode multipoint-to-multipoint primary label switching path, during a failure affecting a given node (104) of said path, with a connected-mode multipoint-to-multipoint standby label switching path, said network comprising routing nodes organized into the primary path, the primary path being suitable for having a plurality of egress nodes communicate with one another and comprising links connecting the routing nodes in pairs from an ingress node to the egress nodes, the ingress node having the list of egress nodes and the explicit routes followed by said links, a first node sending a bidirectional-connection open request to a second node is called the upstream node, said second node being called the downstream node, a bidirectional-connection open request message comprising the list of the explicit routes of the label switching path to the various egress nodes, a node having made a request to the given node for a bidirectional connection to be opened being called the upstream protective node of the given node, a node to which the given node has made a request to open a bidirectional connection being called the downstream protective node of the given node, the standby path having been initially established between an upstream protective node (101) of the given node and downstream protective nodes (105, 106) of the given node, the upstream protective node of the given node having made a request for a bidirectional connection to be opened with the downstream protective nodes of the given node, said upstream protective node playing the role of ingress node in the establishment of this standby path,
said method comprising the following steps implemented by a downstream protective node of the given node, the standby path being suitable for having communicate with one another a set of protective nodes consisting of the upstream node and downstream nodes of the given node:
- a step (F3) of receiving a protection request originating from the upstream protective node of the given node, said protection request indicating the primary path, the standby path and a standby label to be associated, by the protective nodes of the set, with packets intended to be routed via one of the links of the primary path connecting the given node to one of the protective nodes of the set and to be routed by the standby path during the failure,
- a step (F5) of configuring a contextual label switching table intended to be used during the failure, said table associating with the standby label, for each link of the primary path emanating from the protective node, except for the link affected by the failure, an exit toward the primary path.

4. Method according to Claim 3, wherein said protection request furthermore comprises an identifier of the upstream protective node to be associated by way of label with said packets in addition to the standby label.

5. Method for routing, in a label switching communication network, packets during a failure affecting a given node (104) of a connected-mode multipoint-to-multipoint primary label switching path, in which said primary path is protected with a connected-mode multipoint-to-multipoint standby label switching path, said protection having been initiated according to Claims 1 and 3,
wherein, the protective nodes route received packets in the following way:
- packets received by way of a link of the standby path and with which the standby label is associated are routed, if needs be, toward other links of the standby path and toward links of the primary path emanating from said node, except for the link connecting the protective node to the given node;
- packets received by way of a link of the primary path are routed via the standby path after association with the standby label and, if needs be, toward other primary-path links emanating from the node, except for the link connecting the protective node to the given node.

6. Upstream protective node (300) for protecting, in a label switching communication network, a connected-mode multipoint-to-multipoint primary label switching path, during a failure affecting a given node of said path, with a connected-mode multipoint-to-multipoint standby label switching path, comprising means (309, 304, 305, 306) arranged to implement the steps according to Claim 1.

7. Downstream protective node (300) for protecting, in a label switching communication network, a connected-mode multipoint-to-multipoint primary label switching path, during a failure affecting a given node of said path, with a connected-mode multipoint-to-multipoint standby label switching path, comprising means (304, 306) arranged to implement the steps according to Claim 3.

8. Communication system arranged to protect, in a label switching communication network, a connected-mode multipoint-to-multipoint primary label switching path, during a failure affecting a given node of said path, with a connected-mode multipoint-to-multipoint standby label switching path, a node having made a request to the given node for a bidirectional connection to be opened being called the upstream protective node of the given node, a node to which the given node has made a request to open a bidirectional connection being called the downstream protective node of the given node, the standby path having been initially established between an upstream protective node (101) of the given node and downstream protective nodes (105, 106) of the given node, the upstream protective node of the given node having made a request for a bidirectional connection to be opened with the downstream protective nodes of the given node, suitable for having communicate with one another a set of protective nodes consisting of the upstream node and downstream nodes of the given node, said system comprising:
- an upstream protective node according to Claim 6;
- at least one downstream protective node according to Claim 7.

9. Program for an upstream node of a label switching communication network, for protecting a connected-mode multipoint-to-multipoint label switching path with a connected-mode multipoint-to-multipoint standby label switching path during a failure affecting a given node of said primary path, comprising program instructions intended to command the execution of the steps of the method for initiation of protection according to Claim 1 which are executed by said node, when said program is executed by the latter.

10. Storage medium readable by a node of a label switching communication network in which the program according to Claim 9 is stored.

11. Program for a downstream node of a label switching communication network, for protecting a connected-mode multipoint-to-multipoint label switching path with a connected-mode multipoint-to-multipoint standby label switching path during a failure affecting a given node of said primary path, comprising program instructions intended to command the execution of the steps of the protecting method according to Claim 3 which are executed by said node, when said program is executed by the latter.

12. Storage medium readable by a node of a label switching communication network in which the program according to Claim 11 is stored.
